# EUROPÄISCHE PATENTSCHRIFT

(11) **EP 0 771 961 B1**
(45) Veröffentlichungstag und Bekanntmachung des Hinweises auf die Patenterteilung: **29.09.1999**
(21) Anmeldenummer: 96116669.1
(22) Anmeldetag: 17.10.1996
(51) Int. Cl.: F16D 3/84, A01B 71/08

(54) **Schutzvorrichtung für teleskopierbare Wellen**
Protection device for telescopic shafts
Dispositif de protection pour arbre télescopique

(30) Priorität: 04.11.1995 DE 19541155
(43) Veröffentlichungstag der Anmeldung: 07.05.1997
(73) Patentinhaber: GKN Walterscheid GmbH, 53797 Lohmar (DE)
(72) Erfinder: Adamek, Wolfgang, Dipl.-Ing., 53797 Lohmar (DE); Entrup, Hubert Grosse, Dipl.-Ing., 53797 Lohmar (DE); Herchenbach, Paul, 53809 Ruppichteroth (DE); Kämpf, Klaus, Dipl.-Ing., 53797 Lohmar (DE); Kretschmer, Horst, 51145 Köln (DE); Nienhaus, Clemens, Dipl.-Ing., 53819 Neunkrichen-Seelscheid (DE); Sarfert, Andreas, 53113 Bonn (DE); Schott, Wilhelm, Dipl.-Ing., 50996 Köln (DE)
(74) Vertreter: Harwardt, Günther, Dipl.-Ing.

(56) Entgegenhaltungen:
- DD-A- 43 295
- DE-A- 3 916 748
- GB-A- 2 102 915
- US-A- 2 953 000
- US-A- 3 108 457

## Beschreibung

Die Erfindung betrifft eine Schutzvorrichtung für teleskopierbare, rotierende Wellen, insbesondere Gelenkwellen, für den Antrieb von oder Antriebe in landwirtschaftlichen Geräten, mit zwei axial ineinandergesteckten und sich überdeckenden sowie in Richtung ihrer Längsachse zueinander verstellbaren Schutzrohren aus Kunststoff, nämlich einem äußeren und einem inneren Schutzrohr, von denen mindestens eines eine parallel zur Längsachse verlaufende Nut und das andere mindestens eine parallel zur Längsachse verlaufende Führungsrippe, welche im gegenseitigen Eingriff sind, aufweist.

Eine solche Schutzvorrichtung ist in der DE 39 16 748 C2 beschrieben. Es wurde festgestellt, daß die nach innen gerichteten Rippen und Vertiefungen innerhalb der Wandstärke keine genügend große drehfeste Verbindung bewirken, so daß eine Relativdrehung zwischen dem inneren und dem äußeren Schutzrohr trotzdem noch eintreten kann.

Der Erfindung liegt daher die Aufgabe zugrunde, eine Schutzvorrichtung vorzuschlagen, die eine den Anforderungen genügende drehfeste Verbindung zwischen dem inneren und äußeren Schutzrohr bewirkt und darüber hinaus über den axialen Verstellweg eine möglichst geringe Reibung bei radialer Belastung gewährleistet.

Diese Aufgabe wird erfindungsgemäß dadurch gelöst, daß das äußere Schutzrohr mindestens drei zur Längsachse hin offene Nuten an seiner Innenfläche aufweist, welche durch Paare von parallel zur Längsachse verlaufenden, von der Innenfläche vorstehenden Rippen des äußeren Schutzrohres begrenzt werden, daß die Paare von Rippen auf dem Umfang der Innenfläche um die Längsachse verteilt angeordnet sind, daß das äußere Schutzrohr an seiner Innenfläche jeweils zwischen den Paaren von Rippen mit mindestens je einem von der Innenfläche in Richtung auf die Längsachse vorstehenden Führungssteg versehen ist, daß das innere Schutzrohr mit radial von seiner Außenfläche nach außen vorstehenden Führungsrippen versehen ist, deren Anzahl der Anzahl der Paare von Rippen des äußeren Schutzrohres entspricht und die entsprechend verteilt angeordnet sind und zwischen die jeweils ein Paar bildenden Rippen mit Spiel in Umfangsrichtung und in radialer Richtung eingreifen, wobei die Rippen und Führungsstege dem äußeren Schutzrohr und die Führungsrippen dem inneren Schutzrohr angeformt sind.

Von Vorteil bei dieser Ausbildung ist, daß über die vorgesehenen Paare von Rippen des äußeren Schutzrohres und die zwischen diese eingreifenden Führungsrippen des inneren Schutzrohres eine genügend große drehfeste Verbindung erzielt wird. Darüber hinaus sorgen die Führungsstege dafür, daß nur geringe Anlageflächen zwischen dem inneren Schutzrohr und dem äußeren Schutzrohr gegeben sind, so daß einerseits eine genügend große Zentrierung und andererseits eine geringe Reibwirkung gegeben ist. Die beiden Schutzrohre lassen sich leicht in Richtung der Längsachse zueinander verstellen. Darüber hinaus bewirkt der vorgesehene Umfangsabstand in Form des Spieles zwischen den Rippen und der Führungsrippe dafür, daß auch kein Verklemmen eintreten kann. Bei exzessiver radialer Belastung ist zusätzlich gewährleistet, daß auch die Rippen und die Führungsrippe dafür sorgen, daß eine genügende Abstützung der beiden Schutzrohre zueinander gegeben ist und die Funktion als Unfallschutz gewährleistet ist. Ferner ist dadurch, daß die Rippen des äußeren Schutzrohres, von der Innenfläche vorstehen, gewährleistet, daß eine weitestgehend glatte Außenoberfläche erzielt wird, die einen wirksamen Aufwickelschutz und damit geringe Verletzungsgefahr bei Berührung durch eine Bedienungsperson, beispielsweise den Traktorfahrer, bietet. Ein Aufwickelschutz wird insofern erzielt, als die Form gewährleistet, daß dann, wenn beispielsweise vergessen wurde, die Schutzvorrichtung gegen Rotation durch Anhängen an einen Festpunkt des Traktors zu sichern, die damit als stillstehender Schutz dient, die Kleidung der in die Nähe kommenden Person nicht aufgewickelt werden kann. Üblicherweise dienen solche Schutzvorrichtungen als stillstehender Schutz, indem sie beispielsweise durch eine Kette, ein Seil oder dergleichen an einem Festpunkt des Gerätes festgelegt werden. Aufgrund der Rippen und der Führungsrippe je Paar ist gewährleistet, daß die Schutzrohre und die an diese angeschlossenen Schutztrichter wirksam gegen Drehung gesichert werden.

Die Rippen und Führungsrippen sowie Führungsstege können unmittelbar bei der Extrusion der Schutzrohre hergestellt oder in Form eines Teilschrittes des Herstellungsvorganges angeformt werden.

Als Werkstoff für solche Rohre kommt vorzugsweise HDPE = "High density Polyethylene" = Polyäthylen hoher Dichte in Frage.

In Ausgestaltung der Erfindung ist vorgesehen, daß das innere Schutzrohr mit Ausnahme der davon abstehenden Führungsrippen im Querschnitt als Kreisring gestaltet ist.

Für das äußere Schutzrohr sind zwei Varianten vorgesehen. Nach einer ersten Ausgestaltungsvariante ist vorgesehen, daß das äußere Schutzrohr mit Ausnahme der Rippen und Führungsstege im Querschnitt als Kreisring gestaltet ist und die Führungsstege länger sind als die Rippen.

Eine bevorzugte Ausführungsform sieht jedoch vor, daß das äußere Schutzrohr mit seiner Innenfläche zur Außenfläche des inneren Schutzrohres im Bereich der Paare von Rippen einen größeren Abstand aufweist als im Bereich der Führungsstege und daß die Wandung des äußeren Schutzrohres im Wandungsabschnitt jeweils zwischen zwei Paaren von Rippen im Querschnitt mit einem Bogen verläuft, dessen Krümmung kleiner ist als der des Wandungsabschnittes im Bereich der Paare von Rippen.

Von besonderem Vorteil hierbei ist, daß eine glatte Oberfläche ohne Vorsprünge erzielt wird bei gleichzeitiger Minimierung des Zwischenraums zum Innenrohr, um die Möglichkeit des Eindringens von Schmutz zu reduzieren.

Bei beiden Ausgestaltungsvarianten ist vorgesehen, daß die Führungsstege mit ihren Stegenden als Abstandhalter für das äußere Schutzrohr mit den Rippen zur Außenfläche des inneren Schutzrohres und der Endfläche der Führungsrippen zum Innenflächenabschnitt des äußeren Schutzrohres zwischen den beiden Rippen eines jeweiligen Paares von Rippen dienen.

Zwei bevorzugte Ausführungsbeispiele der Erfindung und deren Anwendung bei einer Gelenkwelle in einer Schutzvorrichtung sind in der Zeichnung schematisch dargestellt und nachfolgend näher erläutert.

Es zeigt
- Figur 1: eine landwirtschaftliche Gelenkwelle im Längsschnitt,
- Figur 2: eine bevorzugte Ausführungsform der Schutzvorrichtung mit den beiden Schutzrohren, bei der der Querschnitt des äußeren Schutzrohres vom Kreisquerschnitt abweicht, gemäß Schnittlinie II-II von Figur 1, wobei jedoch nur das innere und äußere Schutzrohr dargestellt sind und

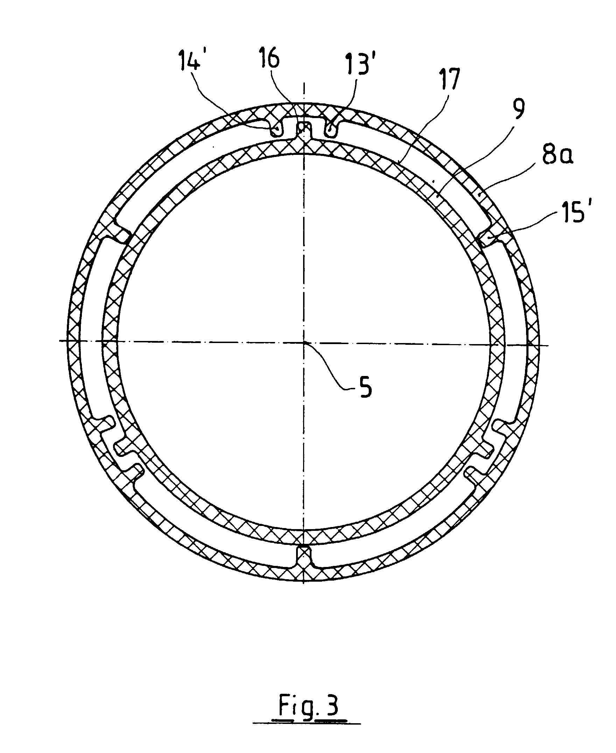

- Figur 3: einen Querschnitt entsprechend Figur 2 durch eine weitere Ausführungsform, bei der das äußere und das innere Schutzrohr im Querschnitt einen Kreisring darstellen.

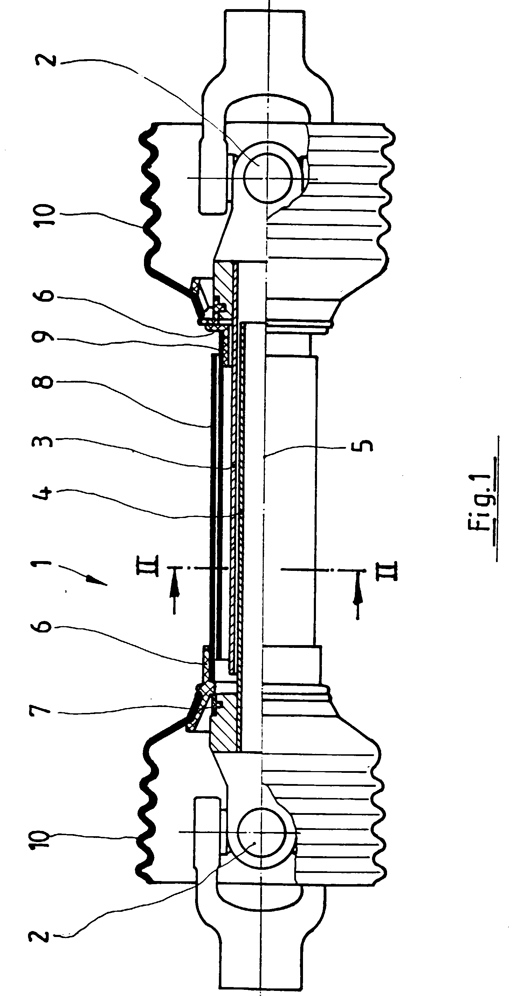

In der Figur 1 ist eine Gelenkwelle 1, die beispielsweise zum Antrieb eines landwirtschaftlichen Gerätes durch die Zapfwelle des Traktors dient, dargestellt. An deren beiden Enden sind Kreuzgelenke 2 angebracht, von denen eines eine Gelenkgabel zur Verbindung mit der Zapfwelle und das andere eine Gelenkgabel zur Verbindung mit der Antriebswelle des landwirtschaftlichen Gerätes aufweist. Die Proiflrohre 3, 4 sind drehfest, aber längenveränderlich miteinander verbunden, so daß ein Drehmoment zwischen den beiden Anschlußgabeln der Gelenke 2 übertragbar ist und zusätzlich eine Abstandsänderung zwischen diesen stattfinden kann. Das äußere Profilrohr 3 ist mit der inneren Gelenkgabel eines der beiden Gelenke 2, beispielsweise dem in Figur 1 dargestellten rechten Gelenk 2, verbunden, während das in dieses eingesteckte innere Profil 4 mit dem in der Zeichnungsfigur links dargestellten Gelenk 2 verbunden ist. Die beiden Profilrohre 3, 4 besitzen einen vom Kreisquerschnitt abweichenden Querschnitt, beispielsweise in Form eines Zwei-Rippen-Rohres, so daß eine Drehmomentübertragung zwischen den beiden Gelenken 2 möglich ist. Beide Profilrohre 3,4 sind zur Längenveränderung zwischen den beiden Gelenken 2,in Richtung der Längsachse 5 ineinander verschiebbar.

Den beiden inneren Gelenkgabeln der Gelenke 2 ist jeweils ein Lagerring 7 zugeordnet, der in einer Nut der inneren Gelenkgabeln drehbar aufgenommen ist. Die dem in der Zeichnungsfigur links dargestellten Gelenk 2 zugeordnete Anschlußkappe 6 dient zur Festlegung und Zentrierung des äußeren Schutzrohres 8 sowie eines Schutztrichters 10 und die dem in der Zeichnungsfigur 1 rechts dargestellten Gelenk 2 zugeordnete Anschlußkappe 6 zur Zentrierung und Festlegung des inneren Schutzrohres 9. Das innere Schutzrohr 9 taucht in das äußere Schutzrohr 8 entlang der Längsachse 5 verschiebbar ein. In der Zeichnungsfigur 1 ist die Gelenkwelle 1 in ihrer verkürzten Position dargestellt. Die beiden Gelenke 2 können ausgehend von dieser Position auseinanderbewegt werden, wobei auch die beiden Profilrohre 3, 4 und die beiden Schutzrohre 8, 9 entlang der Längsachse zueinander eine Relativbewegung ausführen.

Auch dem rechten Gelenk 2 ist ein Schutztrichter 10 zugeordnet, der an der diesem Gelenk zugehörigen Anschlußkappe 6 angebracht ist. Die beiden Schutzrohre 8, 9 und Schutztrichter 10 dienen als Berührungsschutz für eine Bedienungsperson, das heißt sie stehen dann still, wenn eine Rotation der Gelenkwelle um die Längsachse 5 erfolgt. Es rotieren also nur die Gelenke 2 und die beiden Profilrohre 3, 4.

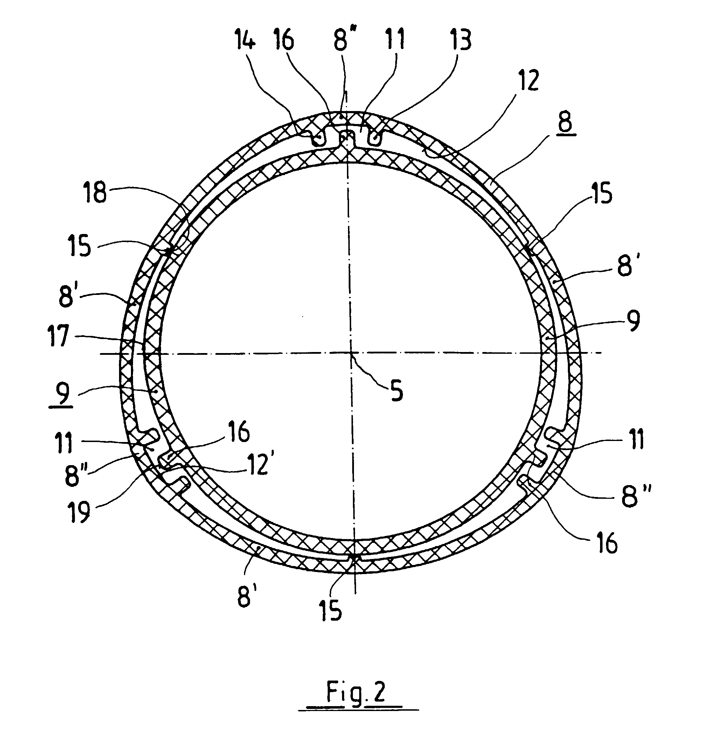

In Figur 2 ist ein Querschnitt durch das innere und äußere Schutzrohr 8, 9 gemäß der Schnittlinie II-II von Figur 1 dargestellt. Die beiden Profilrohre 3, 4 sind fortgelassen. Diese Ausführungsform stellt eine bevorzugte Ausführungsform dar. Das äußere Schutzrohr 8 weist drei Paare von umfangsverteilt angeordneten Rippen 13, 14 auf, die in Richtung auf die Längsachse 5 von seiner Innenfläche 12 vorstehen. Hierdurch werden jeweils zwischen zwei Rippen 13, 14 eines jeden Rippenpaares Nuten 11 ausgebildet. Die Innenfläche 12 des äußeren Schutzrohres 8 ist im Bereich zwischen den beiden Rippen 13, 14 eines jeden Rippenpaares mit 12' bezeichnet. Der Wandungsabschnitt 8' zwischen zwei auf dem Umfang aufeinanderfolgenden Rippenpaaren 13, 14 weist etwa mittig einen nach innen in Richtung auf die Längsachse 5 radial vorstehenden Führungssteg 15 auf, der in seinem Stegende 18 endet. Das Stegende 18 ist die Fläche, die der Außenfläche 17 des inneren Schutzrohres 9 gegenüberliegt und zur Abstützung des äußeren Schutzrohres 8 am inneren Schutzrohr 9 bzw. zur Zentrierung des inneren Schutzrohres 9 im äußeren Schutzrohr 8 dient. Das innere Schutzrohr 9 ist im Querschnitt als Kreisring gestaltet, mit Ausnahme der Führungsrippen 16, die radial von seiner Außenfläche 17 nach außen vorstehen und entsprechend den Nuten 11 verteilt angeordnet sind und zwischen die beabstandeten Rippen 13, 14 eines jeden Rippenpaares mit Umfangsspiel und Radialspiel eingreifen, das heißt die Endflächen 19 der Führungsrippen 16 weisen einen Abstand zum Innenflächenabschnitt 12' zwischen jeweils den beiden Rippen 13, 14 auf. Ebenso ist ein Abstand der Endflächen der Rippen 13, 14 zur Außenfläche 17 des inneren Schutzrohres 9 gegeben.

Ferner ist erkennbar, daß das äußere Schutzrohr 8 im Bereich zwischen den Paaren von Rippen 13, 14 einen Wandungsabschnitt 8' aufweist, der einen zum Wandungsabschnitt 8'' zwischen jeweils zwei Rippen 13, 14 eines Paares im Verhältnis und zum Verlauf der Wandung des inneren Schutzrohres 9 kleinere Krümmung aufweist. Hierdurch ergibt sich, daß das äußere Schutzrohr 8 im Wandungsabschnitt 8'', der jeweils die nach innen von der Innenfläche 12 vorstehenden Rippen 13,14 aufweist, zur Außenfläche 17 des inneren Schutzrohres 9 einen größeren Abstand besitzt als im Bereich des Wandungsabschnittes 8' und insbesondere im Bereich der Führungsstege 15.

Je nach den auftretenden Herstellungstoleranzen kann dieser Abstand unterschiedlich sein. Durch die Führungsstege 15 soll jedoch gewährleistet sein, daß auch bei kleinstem Spiel nur die Führungsstege 15 mit ihren Endflächen 18 in Anlage zu der Außenfläche 17 des inneren Schutzrohres 9 gelangen, wenn ein Normalbetrieb vorliegt. Bei Belastung von außen können auch die Rippen 13, 14 in Anlage zur Außenfläche 17 des inneren Schutzrohres 9 kommen.

Es ist erkennbar, daß die Außenfläche des äußeren Schutzrohres 8 im wesentlichen rund gestaltet ist und somit keine Angriffsfläche erzeugt, die ein Aufwickeln von Kleidung möglich machen könnte oder eine sonstige Verletzungsgefahr bewirken könnte.

Der Zeichnungsfigur 3 ist eine Ausführungsform zu entnehmen, bei der sowohl das innere Schutzrohr 9 als auch das äußere Schutzrohr 8a im Querschnitt im wesentlichen als Kreisringe gestaltet sind. Das innere Schutzrohr 9 ist entsprechend dem inneren Schutzrohr gemäß Figur 2 ausgebildet. Das äußere Schutzrohr 8a besitzt Rippen 13', 14', die in Richtung auf die Längsachse 5 vorstehen, deren Länge kleiner bemessen ist als die Länge der Führungsstege 15', so daß gewährleistet ist, daß bei kleinsten Bautoleranzen nur die Führungsstege 15' zur Anlage an der Außenfläche 17 des inneren Schutzrohres 9 gelangen.

### Bezugszeichenliste

- 1: Gelenkwelle
- 2: Gelenk
- 3: Äußeres Profilrohr
- 4: Inneres Profilrohr
- 5: Längsachse
- 6: Anschlußkappe
- 7: Lagerring
- 8, 8a: Äußeres Schutzrohr
- 8', 8": Wandungsabschnitte
- 9: Inneres Schutzrohr
- 10: Schutztrichter
- 11: Nut
- 12: Innenfläche
- 12': Innenflächenabschnitt
- 13, 13', 14, 14': Rippen
- 15, 15': Führungsstege
- 16, 16': Führungsrippen
- 17: Außenfläche
- 18: Stegende
- 19: Endfläche der Führungsrippe

## Patentansprüche

1. Schutzvorrichtung für teleskopierbare, rotierende Wellen, insbesondere Gelenkwellen (1), für den Antrieb von oder Antriebe in landwirtschaftlichen Geräten, mit zwei axial ineinandergesteckten und sich überdeckenden sowie in Richtung ihrer Längsachse zueinander verstellbaren Schutzrohren (8, 9) aus Kunststoff, nämlich einem äußeren (8) und einem inneren (9) Schutzrohr, von denen mindestens eines eine parallel zur Längsachse (5) verlaufende Nut (11) und das andere mindestens eine parallel zur Längsachse (5) verlaufende Führungsrippe (16), welche im gegenseitigen Eingriff sind, aufweist,
dadurch gekennzeichnet,
daß das äußere Schutzrohr (8) mindestens drei zur Längsachse (5) hin offene Nuten (11) an seiner Innenfläche (12) aufweist, welche durch Paare von parallel zur Längsachse (5) verlaufenden, von der Innenfläche (12) vorstehenden Rippen (13, 14) des äußeren Schutzrohres (8) begrenzt werden, daß die Paare von Rippen (13, 14) auf dem Umfang der Innenfläche (12) um die Längsachse (5) verteilt angeordnet sind, daß das äußere Schutzrohr (8) an seiner Innenfläche (12) jeweils zwischen den Paaren von Rippen (13, 14) mit mindestens je einem von der Innenfläche (11) in Richtung auf die Längsachse (5) vorstehenden Führungssteg (15) versehen ist und daß das innere Schutzrohr (9) mit radial von seiner Außenfläche (17) nach außen vorstehenden Führungsrippen (16) versehen ist, deren Anzahl der Anzahl der Paare von Rippen (13, 14) des äußeren Schutzrohres (8) entspricht und die entsprechend verteilt angeordnet sind und zwischen die jeweils ein Paar bildenden Rippen (13, 14) mit Spiel in Umfangsrichtung und in radialer Richtung eingreifen, wobei die Rippen (13, 14) und Führungsstege (15) dem äußeren Schutzrohr (8) und die Führungsrippen (16) dem inneren Schutzrohr (9) angeformt sind.

2. Schutzvorrichtung nach Anspruch 1,
dadurch gekennzeichnet,
daß das innere Schutzrohr (9) mit Ausnahme der davon abstehenden Führungsrippen (16) im Querschnitt als Kreisring gestaltet ist.

3. Schutzvorrichtung nach Anspruch 2,
dadurch gekennzeichnet,
daß das äußere Schutzrohr (8) mit Ausnahme der Rippen (13, 14) und Führungsstege (15) im Querschnitt als Kreisring gestaltet ist und die Führungsstege (15) länger sind als die Rippen (13, 14).

4. Schutzvorrichtung nach Anspruch 2,
dadurch gekennzeichnet,
daß das äußere Schutzrohr (8) mit seiner Innenfläche (11) zur Außenfläche (17) des inneren Schutzrohres (9) im Bereich der Paare von Rippen (13, 14) einen größeren Abstand aufweist als im Bereich der Führungsstege (15) und daß die Wandung des äußeren Schutzrohres (8) im Wandungsabschnitt (8') jeweils zwischen zwei Paaren von Rippen (13, 14) im Querschnitt mit einem Bogen verläuft, dessen Krümmung kleiner ist als der des Wandungsabschnittes (8'') im Bereich der Paare von Rippen (13, 14).

5. Schutzvorrichtung nach einem der Ansprüche 1 bis 4,
dadurch gekennzeichnet,
daß die Führungsstege (15) mit ihren Stegenden (18) als Abstandhalter für das äußere Schutzrohr (8) mit den Rippen (13, 14) zur Außenfläche (17) des inneren Schutzrohres (9) und der Endfläche (19) der Führungsrippen (16) zum Innenflächenabschnitt (12') des äußeren Schutzrohres (8) zwischen den beiden Rippen (13, 14) eines jeweiligen Paares von Rippen (13, 14) dienen.

## Claims

1. A protective device for telescopic, rotating shafts, especially driveshafts (1) used for driving, or for drives in, agricultural implements, having two axially inserted and overlapping protective tubes (8, 9) which are displaceable relative to one another in the direction of their longitudinal axis and are made of plastics,i.e. an outer (8) and an inner (9) protective tube of which at least one comprises a groove (11) extending parallel to the longitudinal axis (5) and of which the other one comprises at least one guiding rib (16) extending parallel to the longitudinal axis (5), which groove (11) and rib (16) engage one another,
characterised in
that the outer protective tube (8), in its inner face (12), comprises at least three grooves (11) which are open towards the longitudinal axis (5) and which are delimited by pairs of ribs (13, 14) of the outer protective tube (8), which pairs of ribs (13, 14) extend parallel to the longitudinal axis (5) and project from the inner face (12), that the pairs of ribs (13, 14) are arranged so as to be distributed on the circumference of the inner face (12) around the longitudinal axis (5), that the outer protective tube (8), on its inner face (12), between the pairs of ribs (13, 14), is provided with at least one guiding web (15) projecting from the inner face (12) towards the longitudinal axis (5) and that the inner protective tube (9) is provided with guiding ribs (16) which project radially outwardly from its outer face (17), whose number corresponds to the number of pairs of ribs (13, 14) of the outer protective tube (8), which are arranged so as to be distributed accordingly and which engage between each pair of ribs (13, 14) with play in the circumferential direction and in the radial direction, with the ribs (13, 14) and the guiding webs (15) being formed on to the outer protective tube (8) and with the guiding ribs (16) being formed on to the inner protective tube (9).

2. A protective device according to claim 1,
characterised in
that the cross-section of the inner protective tube (9) has the shape of a circular ring, with the exception of the guiding ribs (16) projecting therefrom.

3. A protective device according to claim 2,
characterised in
that the cross-section of the outer protective tube (8) has the shape of a circular ring, with the exception of the ribs (13, 14) and the guiding webs (15) and that the guiding webs (15) are longer than the ribs (13, 14).

4. A protective device according to claim 2,
characterised in
that in the region of the pairs of ribs (13, 14), the distance between the inner face (11) of the outer protective tube (8) and the outer face (17) of the inner protective tube (9) is greater than in the region of the guiding webs (15) and that the wall of the outer protective tube (8), in the wall portion (8') between two pairs of ribs (13, 14), has an archshaped cross-section whose curvature is smaller than that of the wall portion (8") in the region of the pairs of ribs (13, 14).

5. A protective device according to any one of claims 1 to 4,
characterised in
that the guiding webs (15) with their web ends (18) serve as spacing means for the ribs (13, 14) of the outer protective tube (8) relative to the outer face (17) of the inner protective tube (9) and for the end face (19) of the guiding ribs (16) relative to the inner face portion (12') of the outer protective tube (8) between the two ribs (13, 14) of each pair of ribs (13, 14).

## Revendications

1. Dispositif de protection pour des arbres télescopiques en rotation, en particulier pour des arbres articulés (1), destinés à l'entraînement ou à des entraînements dans des appareils agricoles, comportant deux tubes de protection (8, 9) en matière plastique enfichés axialement l'un dans l'autre et en chevauchement, et susceptibles de se déplacer l'un par rapport à l'autre en direction de leur axe longitudinal, à savoir un tube de protection extérieur (8) et un tube de protection intérieur (9) dont l'un présente au moins une gorge (11) s'étendant parallèlement à l'axe longitudinal (5) et dont l'autre présente au moins une nervure de guidage (16) s'étendant parallèlement à l'axe longitudinal (5), qui sont en engagement mutuel, caractérisé en ce que le tube de protection extérieur (8) présente sur sa face intérieure (12) au moins trois gorges (11) ouvertes vers l'axe longitudinal (5) qui sont délimitées par des paires de nervures (13, 14) du tube de protection extérieur (8), qui s'étendent parallèlement à l'axe longitudinal (5) et qui font saillie de la face intérieure (12), en ce que les paires de nervures (13, 14) sont agencées en répartition à la périphérie de la face intérieure (12) autour de l'axe longitudinal (5), en ce que le tube de protection extérieur (8) est pourvu sur sa face intérieure (12) entre les paires de nervures respectives (13, 14) d'au moins une barrette de guidage respective (15) qui fait saillie depuis la face intérieure (12) en direction de l'axe longitudinal (5), et en ce que le tube de protection intérieur (9) est pourvu de nervures de guidage (16) qui font saillie radialement depuis sa face extérieure (17) vers l'extérieur et dont le nombre correspond au nombre de paires de nervures (13, 14) du tube de protection extérieur (8) et qui sont agencées en répartition correspondante et entre lesquelles les nervures (13, 14) formant une paire respective s'engagent avec jeu en direction périphérique et en direction radiale, les nervures (13, 14) et les barrettes de guidage (15) étant conformées sur le tube de protection extérieur (8) et les nervures de guidage (16) étant conformées sur le tube de protection intérieur (9).

2. Dispositif de protection selon la revendication 1, caractérisé en ce que le tube de protection intérieur (9) est réalisé avec une section en forme d'anneau de cercle, exception faite des nervures de guidage (16) qui en font saillie.

3. Dispositif de protection selon la revendication 2, caractérisé en ce que le tube de protection extérieur (9) est réalisé avec une section en forme d'anneau de cercle, exception faite des nervures (13, 14) et des barrettes de guidage (15), et en ce que les barrettes de guidage (15) sont plus longues que les nervures (13, 14).

4. Dispositif de protection selon la revendication 2, caractérisé en ce que le tube de protection extérieur (8) présente au niveau de sa face intérieure (11) et par rapport à la face extérieure (17) du tube de protection intérieur (9), une distance qui est plus grande au niveau des paires de nervures (13, 14) qu'au niveau des barrettes de guidage (15), et en ce que la paroi du tube de protection extérieur (8) s'étend, au niveau du secteur de paroi (8') entre deux paires de nervures respectives (13, 14), avec une section en forme d'arc dont la courbure est inférieure à celle du secteur de paroi (8") au niveau des paires de nervures (13, 14).

5. Dispositif de protection selon l'une quelconque des revendications 1 à 4, caractérisé en ce que les barrettes de guidage (15) servent, par leurs extrémités (18), d'éléments écarteurs pour le tube de protection extérieur (8) avec les nervures (13, 14) vis-à-vis de la face extérieure (17) du tube de protection intérieur (9) et avec la surface d'extrémité (19) des nervures de guidage (16) vis-à-vis du secteur de face intérieure (12') du tube de protection extérieur (8) entre les deux nervures (13, 14) d'une paire de nervures respectives (13, 14).
